Europäisches Patentamt

European Patent Office

Office européen des brevets

(19)

(11) **EP 0 976 060 B1**

(12) **EUROPÄISCHE PATENTSCHRIFT**

(45) Veröffentlichungstag und Bekanntmachung des Hinweises auf die Patenterteilung:
**19.12.2001   Patentblatt 2001/51**

(21) Anmeldenummer: **98920526.5**

(22) Anmeldetag: **15.04.1998**

(51) Int Cl.[7]: **G06F 15/80**, G06N 3/00

(86) Internationale Anmeldenummer:
**PCT/EP98/02208**

(87) Internationale Veröffentlichungsnummer:
**WO 98/47077 (22.10.1998 Gazette 1998/42)**

(54) **FREI PROGRAMMIERBARES, UNIVERSELLES PARALLEL-RECHNERSYSTEM ZUR DURCHFÜHRUNG VON ALLGEMEINEN BERECHNUNGEN**

PARALLEL, UNIVERSAL AND FREE-PROGRAMMABLE COMPUTER SYSTEM FOR GENERAL COMPUTATIONS

SYSTEME D'ORDINATEUR PARALLELE, UNIVERSEL ET A PROGRAMMATION LIBRE POUR EFFECTUER DES CALCULS GENERAUX

(84) Benannte Vertragsstaaten:
**DE GB**

(30) Priorität: **15.04.1997  DE 19715629**

(43) Veröffentlichungstag der Anmeldung:
**02.02.2000   Patentblatt 2000/05**

(73) Patentinhaber: **GMD - FORSCHUNGSZENTRUM INFORMATIONSTECHNIK GMBH
D-53754 Sankt Augustin (DE)**

(72) Erfinder: **ZIMMER, Ralf
D-53115 Bonn (DE)**

(74) Vertreter: **Hilleringmann, Jochen, Dipl.-Ing. et al
Patentanwälte von Kreisler-Selting-Werner,
Postfach 10 22 41
50462 Köln (DE)**

(56) Entgegenhaltungen:
**EP-A- 0 726 530          US-A- 5 555 434**

- **BACH E ET AL: "DNA MODELS AND ALGORITHMS FOR NP-COMPLETE PROBLEMS" PROCEEDINGS OF THE 11TH. ANNUAL IEEE CONFERENCE ON COMPUTATIONAL COMPLEXITY, PHILADELPHIA, MAY 24 - 27, 1996, Nr. CONF. 11, 24. Mai 1996, Seiten 290-300, XP000607961 HOMER S;JIN-YI CAI (EDS )**
- **PAUN G ET AL: "From DNA recombination to DNA computing via formal languages" BIOINFORMATICS. GERMAN CONFERENCE ON BIOINFORMATICS, GCB'96. SELECTED PAPERS, LEIPZIG, GERMANY, 30 SEPT.-2 OCT. 1996, Seiten 210-220, XP002077366 1997, Berlin, Germany, Springer-Verlag, Germany**
- **CSUHAJ-VARJU E ET AL: "DNA computing based on splicing: universality results" PACIFIC SYMPOSIUM ON BIOCOMPUTING '96, PROCEEDINGS OF BIOCOMPUTING '96, HI, USA, 3-6 JAN. 1996, Seiten 179-190, XP002077367 ISBN 981-02-2578-4, 1995, Singapore, World Scientific, Singapore**

## Beschreibung

Die Erfindung betrifft ein frei programmierbares, universelles Parallel-Rechnersystem zur Durchführung von allgemeinen Berechnungen, wobei neben einem elektronischen Rechner ein DNS- bzw. DNA-Rechner eingesetzt wird.

Die Erfindung wird nachstehend anhand der Verwendung eines DNA- bzw. DNS-Subsystems beschrieben, ist aber über die DNA hinaus grundsätzlich bei sämtlichen Biopolymeren anwendbar. Ganz allgemein ausgedrückt handelt es sich bei einem Biopolymer um eine durch definierte Methoden aus Monomeren polymerisierbare Struktur. Bei den definierten Methoden handelt es sich beispielsweise um enzymatische Polymerisation von Nukleotiden, Peptiden oder Zuckereinheiten. Das nach der Erfindung vorgesehene Biopolymer-Subsystem kann also insbesondere ein DNA-, RNA- oder PNA-Subsystem sein. Die Verarbeitung im Biopolymer-Subsystem kann auf Peptid- oder Nukleotid-Ebene erfolgen.

## Stand der Technik: Biologie und Biotechnologie

Durch die großen Fortschritte in der modernen Molekularbiologie [8] und der molekularen Bio- und Gentechnologie sind gewisse Operationen auf DNS-Molekülen bzw. Ensembles von DNS-Molekülen routinemäßig, zum Teil mit automatisierten Apparaten durchführbar geworden.

Die biologischen Prinzipien der DNS-Replikation und Transkription sind durch die Arbeiten von A. Kornberg und anderen seit den fünfziger Jahren mittlerweile sehr gut verstanden [18]. Auch die Funktionsweise und die Handhabung der entsprechenden Enzyme, die diese Operationen durchführen, sind aufgeklärt und werden in der Bio- und Gentechnologie technisch genutzt.

Zu diesen Standardoperationen gehören: das Schneiden von DNS-Molekülen an sehr spezifischen durch die Sequenz definierten Stellen durch Restriktionsenzyme, das Verbinden (Ligieren) zweier solcher Ketten durch das Enzym Ligase, das gezielte Einsetzen von DNS-Stücken an definierte Stellen in einem anderen DNS-Molekül (Klonierung), das schnelle und vielfache Kopien von DNS-Molekülen durch einen automatisierten Prozeß (die sog. PCR = Polymerase chain reaction, Polymerasekettenreaktion), die gezielte Generierung (Synthese) von DNS-Molekülen vorgegebener Sequenz und ähnliche Operationen werden heutzutage in vielen Labors, aber auch großtechnisch eingesetzt und perfektioniert, z. B. im Rahmen der Genomprojekte.

Da ein Liter einer in solchen Experimenten verwendeten DNS-Lösung (von etwa 6 g DNS pro Liter) ca. 6 * $10^{19}$ Moleküle mit jeweils ca. 200 Basenpaaren (bp) enthält, entspricht eine solche Lösung einer theoretischen Informationsspeicherkapazität von 3 * $10^9$ TeraByte/1. Diese Speicherkapazität übertrifft damit heutige elektronische bzw. magnetooptische Speicher um mehr als das Millionenfache.

Bei einem realistischen Zeitansatz für eine biotechnologische Basisoperation von einer Minute (z. B. für eine PCR (= Polymerase chain reaction, Polymerasekettenreaktion) ergeben sich, bei einer simultanen Anwendung auf alle Moleküle in einer solchen Lösung theoretisch etwa 6 * $10^{-19}$ Operationen pro Minute, d. h. etwa 1 Million Tera Operationen/sec. Die leistungsfähigsten derzeitigen Supercomputer erreichen kaum Geschwindigkeiten von Tera Operacionen/sec bei kaum 1 Tera Byte verfügbarem Speicher.

Insgesamt schätzt man, daß die biologischen Operationen auf DNS gegenüber elektronischen Basisoperationen etwa um den Faktor $10^9$ energieeffizienter sind, um den Faktor $10^{12}$ mehr Speicher erlauben (bei der heute technisch erreichbaren Speicherdichte elektronischer und magnetooptischer Systeme), und um den Faktor $10^{15}$ mehr Prozessoren realisierbar machen.

Wenn man die Leistungsfähigkeit eines Rechnersystems als das Produkt der Zahl der Prozessoren und der von jedem Prozessor ausführbaren Operationen pro Zeiteinheit definiert, ergibt sich bei herkömmlichen Rechnern etwa 100 * $10^{10}$ = 1 Tera Operation/sec, wohingegen bei DNS-basierten Systemen (Standard-DNS-Konzentration) 60 * $10^{17}$ = 6 Millionen Tera Operationen möglich sind.

## Stand der Technik: Informatik

Die Entwicklung der Informatik hat zwei alternative, gleich mächtige Berechnungsmodelle hervorgebracht, das zustandsorientierte Modell der Turingmaschine [30] und das funktionale Modell des λ-Kalküls [9,10,11]. Beide Modelle sind bis heute intensiv theoretisch untersucht worden [2,12,15], das funktionale vor allem im Zusammenhang mit der Verifikation von Programmen [21] und der formalen (denotationellen) Semantik [13,29] von Programmiersprachen. Praktisch basieren jedoch alle heutigen Rechnerarchitekturen auf dem zustandsorientierten Modell [19]. Die elektronische Technologie und Chipentwicklung ist jahrzehntelang auf dieses Modell hin optimiert worden [26].

Das alternative Berechnungsmodell des λ-Kalküls basiert auf der geordneten Transformation von Ausdrücken (Replikation und Substitution) mittels Reduktionssprachen [6,7,16,17,33,34,35]. Obwohl dieses Modell aufgrund seiner mathematischen Eleganz und Einfachheit viele praktische Vorteile für die Organisation, Programmierung, Fehlersuche und Verifikation bzw. Validierung von Berechnungen gegenüber der Zustandstransformation aufweist [28,35,36,37] (siehe auch DE-C-25 06 454 und DE-C-25 25 795), konnte es sich gegenüber der vorherrschenden Technologie, auf die es abgebildet werden mußte, bis jetzt nicht durchsetzen. Dies erscheint aus heutiger Sicht auch verständlich, wenn man beachtet, wie disparat die heutige Siliziumtechnologie und das Berechnungsmodell des λ-Kalküls sind.

Durch die Arbeiten von Adleman [1] und Lipton [20] sowie die PCT-Publikation WO-A-97/07440 ist eine Möglichkeit aufgezeigt worden, DNS-Technologie zur Grundlage einer neuen Art von Berechnungen zu machen. Sowohl Adleman als auch Lipton wenden die Technologie auf das zustandsorientierte Berechnungsmodell an. Es gibt sogar Arbeiten, die explizit darauf zielen, Turingmaschinen in DNS abzubilden [4,5]. Dies bereitet allerdings erhebliche Schwierigkeiten und führt dazu, daß bis heute keine universellen DNS-Rechner konzipiert werden, sondern daß vielmehr DNS-Rechner nur für Spezialaufgaben, etwa in der Kryptographie, vorgeschlagen werden. Diese Spezialausrichtung begrenzt den Einsatz der Rechner und damit die Effektivität der DNS-Technologie.

In PAUN G ET AL "From DNA recombination to DNA computing via formal languages "GERMAN CONFERENCE ON BIOINFORMATICS, GCB'96. SELECTEC PAPERS, LEIPZIG, GERMANY, 30 SEPT. - 2. OCT. 1996, Seiten 210-220, 1997 Springer-Verlag, Germany wird ein allgemeiner Überblick über DNA-computing mit Formalsprachen, z. B. splicing und sticking gegeben. Speziell mit DNA-computing basierend auf Splicing befasst sich CSUHAJ-VARJU E ET AL: "DNA computing based on splicing: universality results" PACIFIC SYMPOSIUM ON BIOCOMPUTING '96, HI, USA, 3-6 JAN. 1996, Seiten 179-190, ISBN 981-02 2578-4, 1995, Singapore, World Scientific, Singapore. Schließlich werden in BACH E ET AL: "DNA MODELS AND ALGORITHMS FOR NP-COMPLETE PROBLEMS" PROCEEDINGS OF THE 11TH. ANNUAL IEEE CONFERENCE ON COMPUTATIONAL COMPLEXITY; PHILADELPHIA; MAY 24 - 27, 1996, Nr. CONF. 11, 24. Mai 1996, Seiten 290 - 300, XP000607961 Algorithmen zur Lösung von "NP-complete-Problemen" mit Hilfe der bekannten Adleman und Lipton Operationen beschrieben.

## Kurze Beschreibung der Erfindung

Überraschenderweise ist es möglich, die Vorzüge der Effizienz biologischer Operationen auf DNS-Moleküle durch Kombination eines DNS-Rechners mit einem elektronischen Vorrechner zu nutzen, bei dem die Umsetzung des Programms durch eine Reduktionssprache, insbesondere nach dem λ-Kalkül erfolgt. Das Wesen und die Vorteile derart organisierter Rechner mit Reduktionssprachen, also funktional organisierten und arbeitenden Rechners ist z. B. in [35] beschrieben.

Nach der Erfindung ist also ein frei programmierbares, universelles Parallel-Rechnersystem zur Durchführung von allgemeinen Berechnungen vorgesehen, das versehen ist mit:

- einem elektronischen Vorrechner, der die Eingabe beliebiger und damit zur Spezifikation allgemeiner Berechnungen fähiger Programme erlaubt, deren Umsetzung in Ausdrücke einer Reduktionssprache realisiert und deren Kodierung in eine DNS-Sequenz vornimmt,
- einer Synthesevorrichtung, die die kodierte DNS-Sequenz von dem Vorrechner empfängt und die die DNS-Sequenz in ein entsprechendes DNS-Molekül mit einer spezifizierten Nukleotidabfolge synthetisiert,
- einer Vervielfältigungsvorrichtung zum Vervielfältigen des synthetisierten DNS-Moleküls mittels einer Amplifikationsreaktion,
- einer Reaktionsvorrichtung zum gleichzeitigen Ausführen von Transformationen der DNS-Moleküle mittels molekularbiologischer Techniken gemäß den Reduktionsregeln einer Reduktionssprache, wobei das Ergebnismolekül in der Lösung identifiziert, extrahiert und ggf. vervielfältigt wird, und
- einer Sequenziervorrichtung zum Bestimmen der Sequenz des Ergebnismoleküls,
- wobei diese Sequenz an den Vorrechner weitergegeben wird und
- der Vorrechner die Sequenz dekodiert sowie die dekodierte Sequenz ausgibt.

Bei dem erfindungsgemäßen frei programmierbaren, universellen Parallel-Rechnersystem handelt es sich um eine Kombination aus einem elektronischen Vorrechner und einem DNS-Subsystem. Der elektronische Rechner läßt die Eingabe beliebiger und damit zur Spezifikation allgemeiner Berechnungen fähiger Programme zu, wobei er auf der Basis einer funktionalen Programmiersprache, also auf der Basis einer Reduktionssprache arbeitet. Unter einer "Reduktionssprache" versteht man also insbesondere eine funktionale Programmiersprache, deren Semantik durch bedeutungserhaltende Transformationen der Programme definiert sind. Als Beispiel für derartige funktionale Sprachen seien hier beispielsweise LISP, Miranda und ML genannt. Ferner wird in diesem Zusammenhang auf die Literaturstelle [35] verwiesen. Eine Implementierung einer Reduktionssprache in konventioneller Hardware ist beispielsweise in DE-C-25 06 454 und DE-C-25 25 795 beschrieben.

In dem elektronischen Vorrechner des erfindungsgemäßen Parallel-Rechnersystems wird also das Programm in Ausdrücke einer Reduktionssprache umgesetzt so wie deren Kodierung in eine DNS-Sequenz vorgenommen. Da Reduktionssprachen string-orientiert sind, lassen sie sich vorteilhaft in eine DNS-Sequenz umsetzen. Die kodierte DNS-Sequenz ist nun das Eingangssignal für das DNS-Subsystem, das auf einer Synthesevorrichtung, einer Vervielfältigungsvorrichtung, einer Reaktionsvorrichtung sowie einer Sequenziervorrichtung besteht. Um mit dem DNS-Subsystem parallel arbeiten zu können, wird die kodierte DNS-Sequenz in ein entsprechenden DNS-Molekül synthetisiert und vervielfältigt. Bei der Vervielfältigung bedient man sich einer, Amplifikationsreaktion, wie beispielsweise der PCR (Polymerase-Chain-Reaction) bzw. LCR. (Ligase-Chain-Reaction). Mittels molekularbiologischer Techniken, wie insbesondere den Insert-, Delete- und Substitute-Operationen werden die kopierten DNS-Moleküle transformiert. Bei dieser Transformation wird wiederum von einer Reduktionssprache Gebrauch gemacht; die Transformation erfolgt also entsprechend den Reduktionsregeln dieser Reduktionssprache. Wenn keine Reduktionen mehr möglich sind, liegt das Ergebnismolekül in der aus den transformierten DNS-Molekülen bestehenden Lösung vor. Daß das Ergebnismolekül vorliegt, kann daran erkannt werden, daß die Ausführung weiterer molekularbiologischer Prozesse keine Veränderungen der Moleküle mit sich bringt, die Moleküle also nicht mehr kloniert werden können. Die Reduktionsregeln der Reduktionssprache werden also, was das DNS-Subsystem betrifft, durch den biotechnologischen Prozeß in der Reaktionsvorrichtung ausgeführt. Der Vorteil ist, daß die Transformation der Moleküle massiv parallel durchgeführt werden kann, da die Transformationen gleichzeitig auf eine Vielzahl von DNS-Molekülen ausgeführt werden können.

Durch ebenfalls molekularbiologische Techniken kann das gesuchte Ergebnismolekül bzw. allgemein ausgedrückt ein Molekül in der Lösung identifiziert, extrahiert und ggf. vervielfältigt werden. Sollte man dabei feststellen, daß sich auf das Ergebnismolekül noch Reduktionsoperationen anwenden lassen, so kann man das Ergebnismolekül nach Synthetisierung und Vervielfältigung erneut der Reaktionsvorrichtung zuführen, um weitere Reduktionsschritte durchzuführen.

Jedes aus der Reaktionsvorrichtung extrahierte Ergebnismolekül wird einer Sequenziervorrichtung zugeführt, die die Sequenz des Ergebnismoleküls bestimmt. Diese Sequenz wird an den Vorrechner weitergegeben, der die Sequenz dekodiert sowie das Ergebnis der Dekodierung anzeigt oder ausgibt.

Als Reduktionssprache eignet sich insbesondere der $\lambda$-Kalkül (siehe Literaturstelle [2]). Zu insbesondere dieser Reduktionssprache, aber auch allgemein zu Reduktionssprachen ist weiter hinten unter "Der Aufbau eines DNS-Rechners" Näheres ausgeführt. Der Vorteil des $\lambda$-Kalküls besteht in seiner außerordentlichen Eignung zur Parallelverarbeitung. Grundsätzlich ist aber die Erfindung für sämtliche Reduktionssprachen anwendbar.

Das erfindungsgemäße, frei programmierbare, universelle Rechnersystem zur Durchführung von allgemeinen Berechnungen zeichnet sich also insbesondere dadurch aus,

- daß die Berechnungen durch molekularbiologische Transformation von DNS-Molekülen realisiert wird,
- daß die Berechnungen durch Kombinatorausdrücke einer Reduktionssprache (z. B. dem $\lambda$-Kalkül) spezifiziert, durch entsprechende Nukleotidsequenzen kodiert und durch ein dadurch bestimmtes DNS-Molekül realisiert sind,
- daß die Berechnungen durch spezielle Transformationen der DNS-Moleküle mittels molekularbiologischer Techniken gemäß den Reduktionsregeln des unterliegenden Kalküls vorgenommen werden,
- daß die Reihenfolge der Elementaroperationen (Reduktionen) nicht, bzw. nur durch die kausalen Datenabhängigkeiten des Programms, festgelegt ist, wobei die Church-Rosser-Eigenschaft garantiert, daß das Endergebnis unabhängig von der konkreten Ausführungsreihenfolge eindeutig ist,
- daß die Organisation der Berechnungen durch die kausalen Datenabhängigkeiten geregelt wird,
- daß die unabhängige Ausführung von Basisoperationen auf mehreren DNS-Molekülen oder mehreren Abschnitten desselben DNS-Moleküls ohne explizite zeitliche Synchronisation durchgeführt werden kann,
- daß die oben beschriebenen Eigenschaften die effiziente Nutzung der großen Zahl der in einer Lösung vorhandenen DNS-Moleküle ermöglicht, ohne einen aufwendigen, schwer realisierbaren und das Berechnungspotential erheblich reduzierenden Sequentialisierungsmechanismus in dem DNS-Lösung-System etablieren zu müssen,
- daß Berechnungen im Prinzip (bis auf die Datenabhängigkeiten) auf allen DNS-Molekülen in der verfügbaren Lösung unabhängig (parallel, simultan, nebenläufig) ausgeführt werden.

Das erfindungsgemäße Rechnersystem besteht aus einem herkömmlichen elektronischen Vorrechner, einer "Genmaschine", einem DNS-Rechner wie oben beschrieben und einer Sequenziervorrichtung, wobei

- der Vorrechner eine Programmierumgebung zur Verfügung stellt, die die Eingabe beliebiger und damit zur Spezifikation allgemeiner Berechnungen fähiger Programme erlaubt, die Umsetzung in Ausdrücke einer Reduktionssprache realisiert, und eine Kodierung in eine DNS-Sequenz vornimmt und diese DNS-Sequenz an eine Synthesevorrichtung weitergibt,
- die Synthesevorrichtung ("Genmaschine") eine beliebige DNS-Sequenz in ein entsprechendes DNS-Molekül mit der spezifischen Nukleotidabfolge synthetisiert,
- das synthetisierte Molekül (das Programm) durch beispielsweise eine Amplifikationsreaktion wie LCR-(Ligase-chain-Reaction-) und/oder PCR-(Polymerase-chain-Reaction-) Prozeß geeignet vervielfältigt wird,
- die so erzeugten DNS-Moleküle zur Ausführung von Berechnungen wie oben beschrieben benutzt werden,
- das Ergebnismolekül in der Lösung identifiziert, extrahiert und ggf. vervielfältigt wird,

- ein Sequenzierprozeß z. B. mittels einer herkömmlichen Sequenziervorrichtung, die Sequenz des Ergebnismoleküls bestimmt und die Sequenz an den Vorrechner weitergegeben wird,
- der Vorrechner die berechnete Sequenz dekodiert und dem Benutzer das Ergebnis der Berechnung geeignet präsentiert.

Eine Realisierung des DNS-Rechnersystem wie oben beschrieben sieht insbesondere vor,

- daß die Reduktionssprachenausdrücke in geschlossene λ-Ausdrücke, sog. Superkombinatoren, umgesetzt werden,
- daß spezifische Inkarnationen dieser Superkombinatorausdrücke durch eine spezielle PCR-/LCR-Prozedur erzeugt werden, so daß die Variablen der einzelnen Superkombinatorinkarnationen eindeutig numeriert und damit eindeutig identifizierbar sind,
- daß Superkombinatorreduktionen durch molekularbiologische Techniken auf den so erzeugten Inkarnationen ausgeführt werden, solange noch Reduktionen möglich sind, wobei die Programmapplikation ebenfalls eindeutig markiert wird, so daß nach Interaktion mit den Superkombinatoren und der dadurch spezifizierten Transformation das Ergebnis eindeutig identifiziert und extrahiert werden kann.

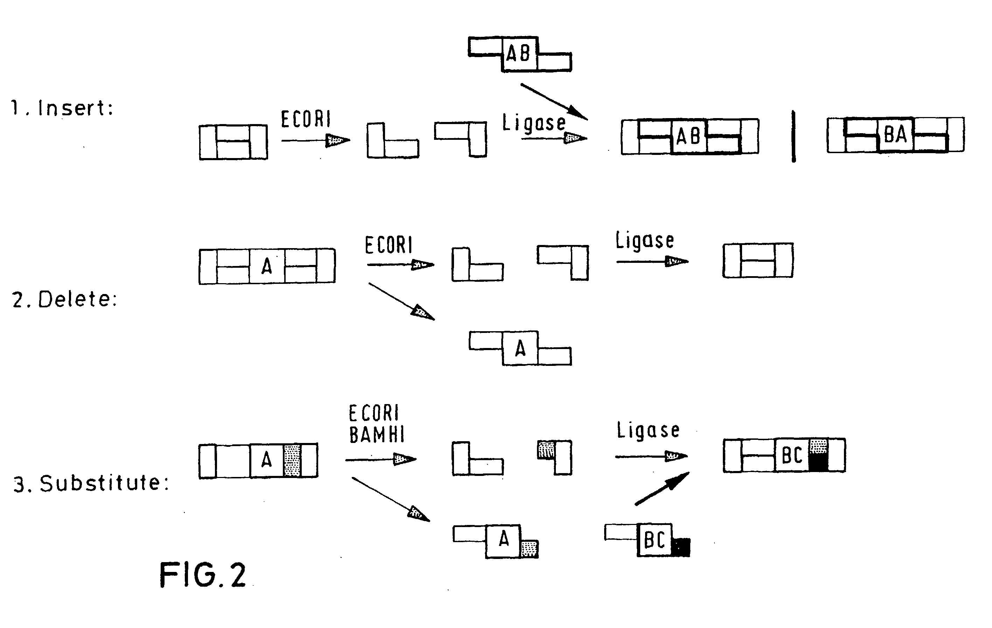

Eine Realisierung für die Basisoperation der Substitution kann durch Restriktionsenzyme erfolgen wie in [35] theoretisch beschrieben (siehe hierzu auch Fig. 2) und wird nachfolgend kurz beschrieben.

Die Syntax des λ-Kalkül ist durch folgende Grammatik definiert:

$E \rightarrow v$    Variable
| c        Konstante
| $\lambda v.E$    Funktionsdefinition
| @$EE$    Funktionsanwendung

Für die vollständige Beschreibung und praktische Durchführung von Berechnungen in einem funktionalen Basissystem ist nur eine Basisoperation, die Substitution $F [v \Leftarrow A]$ des Ausdrucks $A$ für freie Vorkommen der Variablen $v$ im Funktionsausdruck $F$ notwendig [35].

Formal ist die Semantik (Bedeutung), d. h. auch die Berechnungen oder Reduktionen, von λ-Ausdrücken $E$ durch die folgende Funktion $m(E)$ spezifiziert:

$$m(E) : \begin{cases} E & \text{wenn } E = c \mid v \mid \lambda v.F \quad \text{unverändert} \\ F [v \Leftarrow A] & \text{wenn } E = @ \ \lambda v.F \ A \quad \text{Funktions-} \\ & \text{anwendung} \end{cases}$$

Die Realisierung für die Basisoperation der Substitution kann auch durch Hybridisierung (Stickermodell) wie in [35] theoretisch beschrieben erfolgen.

Mit der Erfindung wird also ein Computer vorgeschlagen, der frei programmierbar und in der Lage ist, allgemeine Berechnungen durchzuführen, und sich von herkömmlichen elektronischen Rechnern dadurch unterscheidet,

- daß die Informationsspeicherung durch Biopolymere, insbesondere DNS-Moleküle (DNS = Desoxyribo-Nuklein-Säure, auch DNA = Desoxyribo-Nuclein-Acid) vorgenommen wird,
- daß die Basisoperationen durch biologische bzw. biotechnologische Techniken auf den kodierenden Biopolymeren, insbesondere den DNS-Molekülen durchgeführt werden, und
- daß die Berechnung durch Kombinationsausdrücke einer Reduktionssprache, wie z. B. dem λ-Kalkül organisiert wird.

Letzteres hat den Vorteil, daß im wesentlichen nur eine einzige Operation, die Substitution von *freien* Variablen durch Ausdrücke, realisiert -werden muß, um ein universelles Berechnungssystem zu implementieren. Außerdem garantiert eine inhärente Eigenschaft des λ-Kalküls, die sog. Church-Rosser-Eigenschaft, daß das Endergebnis von Berechnungen, unabhängig von der konkreten Reihenfolge der Basisoperationen eindeutig ist. Das unterscheidet λ-Kalkül-basierte (funktionale) Systeme wesentlich von allen herkömmlichen Rechnern, die auf dem Prinzip der Turingmaschine (Zustandstransformation) aufgebaut sind, und erlaubt erst die effiziente Nutzung des in der DNS-Technologie liegenden Vorteils der unabhängigen Ausführung von Berechnungen auf $10^{17}$ oder mehr Molekülen innerhalb eines Rechenapparates. Bei herkömmlichen Rechnern entsteht das bereits von Parallelrechnern mit nur wenigen (hundert) Prozessoren bekannte Problem, die Berechnung so zu kontrollieren und zu programmieren, daß unerwünschte Seiteneffekte nicht zu indeterministischen Ergebnissen führen. Für viele kooperierende Prozesse in herkömmlichen Systemen ist das entstehende organisatorische Problem sehr schwierig, mit großem Programmieraufwand verbunden, notorisch unsicher, und durch die notwendigen Synchronisationen der einzelnen Berechnungen auch ineffizient. Für Größenordnungen, wie sie bei molekularen Systemen entstehen, sind die Probleme praktisch unlösbar. Durch das hier vorgeschlagene System werden diese Probleme vermieden und DNS-Operationen effizient für praktische Berechnungen nutzbar.

Die Nutzung von DNS-Molekülen ist kürzlich zur Lösung kombinatorischer, einschließlich sog. NP-schwerer Probleme vorgeschlagen worden (DNA computing [1,3,20] und WO-A-57/07440). Die enorme Anzahl von Molekülen wird dabei dazu eingesetzt, simultan alle Kodierungen möglicher Lösungen mittels einiger weniger biotechnologischer Operationen durchzuprobieren. Der Ansatz hat das Potential, die Grenzen konventioneller Computer in dieser Hinsicht um mehrere Größenordnungen hinauszuschieben. Andererseits ist dieser Ansatz zu einfach, um allgemeine, beliebige Rechnungen auszuführen und zudem wird das Potential der großen Zahl von DNS-Molekülen in relativ kleinen Volumina durch das exponentielle Anwachsen der benötigten Operationen bei einem solchen einfachen Durchprobierungs (Enumerations)-Verfahren schnell aufgezehrt.

Demgegenüber wird ein universelles, frei programmierbares System vorgeschlagen, das nicht nur diese Nachteile vermeidet und ein konzises Konzept zur Nutzung massiver Nebenläufigkeit (Parallelität), zur effizienten Arbeitslastverteilung auf viele Prozessoren ohne unnötige Synchronisation und Kommunikation einschließt, sondern auch einfach mit DNS realisiert werden kann. Es ist sogar so, daß die oben erwähnte Basisoperation des λ-Kalküls, d. h. eine Transformation eines durch eine Zeichensequenz kodierten Ausdrucks des λ-Kalkül in einen anderen ebenfalls durch eine Zeichensequenz kodierten Ausdruck, sich geradezu für eine Implementierung durch Zeichenketten, wie sie in DNS-Molekülen zur Speicherung und Verarbeitung in allen biologischen Organismen verwendet werden, anbietet.

Das verkehrt die bisherigen Nachteile funktionaler Systeme, die auf herkömmlichen elektronischen Systemen emuliert werden mußten, ins Gegenteil, da die zustandstransformierenden Systeme praktisch unlösbare Probleme mit der massiven Parallelverarbeitung implizieren.

Nachfolgend wird anhand der Zeichnung ein Ausführungsbeispiel der Erfindung näher erläutert. Im einzelnen zeigen:

Fig. 1  eine schematische Darstellung als Blockschaltbild eines funktionalen DNS-Rechners, und

Fig. 2  eine graphische Darstellung der im DNA-Subsystem des DNS-Rechners verwendeten Basisoperationen (molekularbiologische Techniken).

**Systemkonzept**

Bei dem Ausführungsbeispiel wird die DNS-Technologie für universelle Berechnungen auf der Basis des λ-Kalküls eingesetzt. Damit werden die Stärken der DNS-Technologie, nämlich ein hoher Grad an Parallelität ohne Kommunikationsbedarf, voll ausgenutzt. Außerdem kann das funktionale Berechnungsmodell zum ersten Mal durch eine dem Modell entsprechende Implementierung realisiert und mit angemessenen Prozessorzahlen versehen werden. Bei der Erfindung handelt es sich also um ein hybrides System aus vorgeschalteter Elektronik und DNS-Technologie stehen, das einen universellen funktionalen Rechner darstellt.

Es existieren langjährige Erfahrungen sowohl im Bereich der konzeptuellen Grundlagen des λ-Kalküls und der Reduktionssysteme als auch in Beziehung auf die Implementierung solcher Systeme mittels spezieller Hardware - sog. Reduktionsmaschinen - [6,7,16] und als Emulator/Simulator auf konventionellen Rechnern [17,34,35]. Außerdem steht ein Programmiersystem zur Programmspezifikation mittels mathematischer Funktionsgleichungen [22,23,24,32,33,35] zur Verfügung. Da die Programmausführung auf der bedeutungserhaltenden Transformation von Ausdrücken beruht, kann jeder Zwischenschritt von Berechnungen wieder vollständig in einen Ausdruck der Programmiersprache zurückübersetzt und damit vom Benutzer analysiert werden.

Die effiziente Ausführung solcher Programme auf herkömmlichen Parallelrechnern kann mittels einer vollständig systemgesteuerten Arbeitslastverteilung [34,35] durchgeführt werden. Dabei unterscheiden sich "parallele" nicht von "sequentiellen" Programmen; das Problem der "Parallelisierung" und der zugehörige Korrektheitsnachweis entfällt daher für den Programmierer.

**Der Aufbau eines DNS-Rechners**

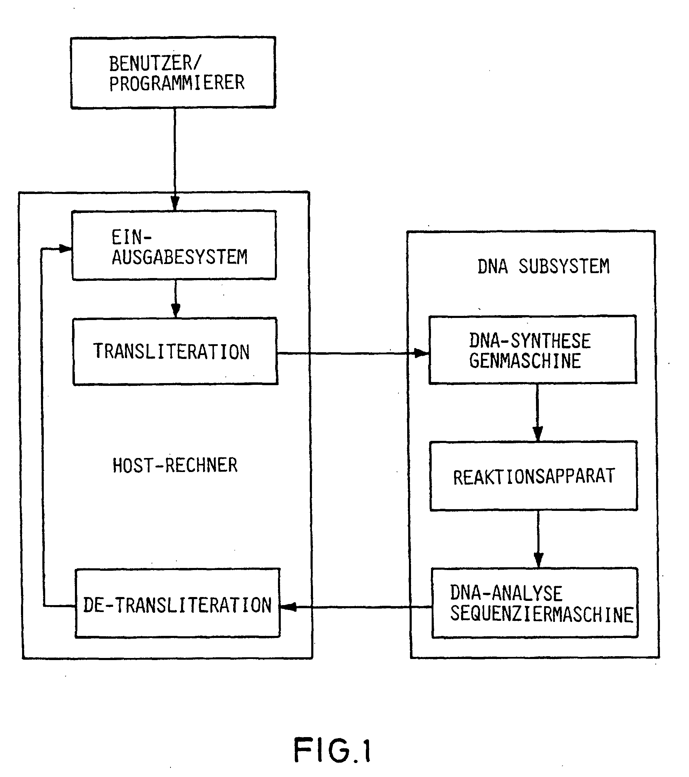

Der DNS-Rechner ist wie in Fig. 1 aufgebaut. Ein Vor- oder Host-Rechner (links) konventioneller Technologie spezifiziert und organisiert die funktionale Berechnung. Er führt ggf. Analysen hinsichtlich der benötigten Ressourcen an DNS-Volumen und Zeit durch. Die DNS-Komponente (rechts) besteht aus einer Apparatur, die DNS-Segmente nach Vorgabe synthetisiert, einem Reaktionsapparat und einer Apparatur, die das Reaktionsergebnis analysiert (ausliest). Letztere Apparatur hat eine Verbindung zurück zum Host-Rechner.

Für den DNS-Rechner sind insbesondere die folgenden Dinge von Vorteil:

- Das funktionale Programm kann in einer hohen funktionalen Programmiersprache [31,25,27] spezifiziert werden. Das vorhandene Entwicklungssystem kann als Programmiersystem und Schnittstelle zum DNS-Rechnersystem eingesetzt werden. Dabei können Programme entwickelt, durch schrittweise Ausführung getestet und interaktiv an kleinen Probleminstanzen validiert werden [22,23,27,35], um sie schließlich für aufwendige Produktionsläufe an das DNS-Subsystem zu übergeben. Die Schnittstellen des Host-Systems zu Standard-Betriebssystemen ermöglichen die Nutzung der DNS-Komponente als "Computer Server" für herkömmliche Programmsysteme.
- Der Vorrechner kompiliert zunächst das funktionale Programm. *Transliteration* bedeutet hier die Berechnung der geeigneten Kodierungen von Programmteilen in DNS-Strings und die Generierung der Anweisung für die DNS-Synthese-Apparatur. Die DNS-Synthese-Apparatur erzeugt die Strings nach den Vorgaben des Host-Rechners.
- Dann wird dafür gesorgt (automatisch oder von Hand), daß die DNS miteinander reagiert. Die Randbedingungen für die Reaktion (Zeit, Temperatur etc.) könnten auch vom Host-Rechner berechnet werden.
- Nach der Reaktion wird das Ergebnis analysiert und die DNS-Strings, die die Ausgabe kodieren, werden selektiert. Auch hier können als Teil der Kompilation im Host-Rechner Steuerungsinformationen generiert werden.
- Schließlich wird die Ausgabeinformation an den Vorrechner zurückgegeben und dekodiert (*De-Transliteration*).

Wie diesem Bild einer DNS-Rechnung entnommen werden kann, sind informatische und molekularbiologische Aspekte stark miteinander verzahnt. Auf der Informatikseite sind DNS-Kodierungen für funktionale Programme erforderlich und der Kompilation anzupassen [35]. Ferner sollten Modelle entwickelt werden, die die molekularbiologischen Reaktionen in der DNS zu analysieren gestatten, weil die Güte von DNS-Kodierungen nur auf der Basis von Wissen darüber geschätzt werden kann, was in der DNS-Lösung tatsächlich passiert.

Auf der molekularbiologischen Seite ist eine neue Art von Labortechnik basierend auf DNS-Replikation (PCR) und Selektion zu entwickeln. Ansätze hierfür gibt es bereits in den Konzepten von DNA computing, wie es bis heute untersucht wird. Für ein (schon universelles) Basisreduktionssystem ist nur eine einzige Operation notwendig: die Anwendung von Funktions- auf Argumentationsausdrücke. In Stringreduktionssystemen wird diese Basisoperation durch die sog. β-Reduktion realisiert. Dabei wird der Argumentausdruck einer Applikation für alle freien Vorkommen einer Variablen im Rumpf der Abstraktion (Funktion) eingesetzt. Der Argumentausdruck muß entsprechend oft repliziert werden.

Die Syntax des λ-Kalkül ist durch folgende Grammatik definiert:

$$E \rightarrow v \quad \text{Variable}$$
$$| \; c \quad \text{Konstante}$$
$$| \; \lambda v.E \quad \text{Funktionsdefinition}$$
$$| \; @EE \quad \text{Funktionsanwendung}$$

Für die vollständige Beschreibung und praktische Durchführung von Berechnungen in einem funktionalen Basissystem ist nur eine Basisoperation, die Substitution $F\,[v \Leftarrow A]$ des Ausdrucks $A$ für freie Vorkommen der Variablen $v$ im Funktionsausdruck $F$ notwendig [35].

Formal ist die Semantik (Bedeutung), d. h. auch die Berechnungen oder Reduktionen, von λ-Ausdrücken $E$ durch die folgende Funktion $m(E)$ spezifiziert:

$$m(E) \; : \; \begin{cases} E & \text{wenn } E = c \mid v \mid \lambda v.F \quad \text{unverändert} \\[2ex] F\,[v \Leftarrow A] \text{ wenn } E = @\,\lambda v.F\,A & \text{Funktions-} \\ & \text{anwendung} \end{cases}$$

Eine Realisierung dieser Basisoperation mittels DNS-operationen ist graphisch in Fig. 2 dargestellt:

Die gesamte Programmausführung eines applikativen Programms ist nun eine (beliebige) Folge solcher β-Reduktionen bis auf eine Normalform erreicht ist. Eine Normalform eines Programmausdrucks (kodiert als DNS-String) ist ein bedeutungsäquivalenter Ausdruck (ebenfalls ein DNS-String), der keine anwendbare Reduktion mehr enthält. Man kann sagen, daß eine funktionale Programmspezifikation zu seiner Bedeutung (dem Programmergebnis) reduziert wird. Dieses Programmergebnis muß identifiziert, zur Rückgabe an den Host selektiert und zurückübersetzt werden. Die Mechanismen für die eindeutige Rückübersetzung (Transliterierung) [24,35] von Reduktionssprachenausdrücken in abstrakten Maschinencode für herkömmliche Rechenarchitekturen sind in den vorgenannten Reduktionsmaschinenprojekten entwickelt und erprobt worden.

Für eine DNS-Realisierung muß eine gezielte Duplizierung des Arguments, das Auffinden von Variablen im Funktionsrumpf durch Matching und das geordnete Ersetzen der Variablen durch den Argumentausdruck implementiert werden.

Bisherigen Konzepten von DNA computing liegt das SIMD-Modell zugrunde. Das heißt, daß die Operationen synchronisiert ablaufen. Jede Reaktion dauert dabei etwa eine Stunde. Funktionale Programme erlauben aufgrund der Church-Rosser-Eigenschaft [2,17,15,35] den asynchronen Ablauf sich gegenseitig nicht störender Operationen. Das bedeutet, daß bei geeigneter Kodierung keine explizite Synchronisation stattfinden muß. Das würde die notwendige Berechnungszeit erheblich herabsetzen, z. B. auf eine Stunde für eine ganze Rechnung anstatt auf eine Stunde pro Rechenschritt. Daß sich die einzelnen Berechnungsschritte nicht stören, wäre wieder durch eine geeignete Kodierung zu sichern.

Das vorgeschlagene Konzept für eine neue Basis von Berechnungen und das neue hybride Rechnersystem stellt zum ersten Mal eine dem mathematisch eleganten Berechnungsmodell angepaßte "Hardwareplattform" zur Verfügung, die auch in natürlicher Weise die inhärente Nebenläufigkeit funktionaler Berechnungen unterstützt. Damit wird auch ein neues und erfolgversprechendes Konzept für die Nutzung "massiver Parallelität" vorgeschlagen.

Die bisher bestehenden Nachteile des DNA computing, die vor allem daher rühren, daß man vollständige Enumeration auf der Basis des zustandsorientierten Modells vorschlägt, also Berechnungen durchführen will, die man nach der klassischen Technologie nie umsetzen würde, fallen hier weg. Bei einer funktionalen DNS-Berechnung wird tatsächlich nur das berechnet, was das funktionale Programm auch in anderen Implementierungen ausführen würde. Das sollte die Anforderungen an das DNS-Volumen erheblich herabsetzen. Darüber hinaus würde durch eine asynchrone DNS-Berechnung die berechnungszeit, aber auch die Notwendigkeit expliziter externer Steuerung der Berechnung drastisch reduziert.

## 1 Weiteres Ausführungsbeispiel

### 1.1 Vorbemerkung

Nachfolgend wird ein weiteres Ausführungsbeispiel der Erfindung beschrieben, wobei die Umsetzung der Reduktionssprache des Vorrechners in DNS-Systemen sowie deren Weiterverarbeitung zur Ausführung des Programms näher beschrieben sind.

Dieses Ausführungsbeispiel bezieht sich auf eine Implementierung eines universellen Berechnungskonzeptes (λ-Kalkül) mittels DNA und insbesondere auf die Nutzung der spezifischen Eigenschaften des λ-Kalküls für ein massiv paralleles asynchron arbeitendes und dezentral organisiertes Rechensystem durch eine kombinierte elektronische/biologische Maschinerie und biotechnologische Basisoperationen zur Implementierung der massiv parallelen Schritte. Das vorgeschlagene biologische Subsystem der Speicherung der Information (Programm und Daten) als Strings in DNA-Molekülen und ihre nebenläufige Bearbeitung durch Operationen auf einer Unzahl unabhängiger Sequenzen/Moleküle, die in einem Reaktor gelöst in einer Pufferlösung enthalten sind, verbietet die Annahme einer zentralen Kontrollinstanz oder detaillierten Steuerung der einzelnen Berechnungsschritte. Im Gegenteil muß ein Berechnungskonzept der Selbstorganisation in solchen Anordnungen Rechnung tragen und durch entsprechende organisatorische Konzepte die erwünschten Berechnungen realisieren.

Die genaue Ausführung der Komponente ist deshalb für die erfindungsgemäße Implementierung des DNA-Rechners von untergeordneter Bedeutung und stark abhängig vom weiteren Fortschritt der biotechnologischen Verfahren und deren Fehlerrate. Der vorgeschlagene Rechner kann direkt an sich wandelnde Technologien und neue Verfahren angepaßt werden, indem die Umsetzung der Programmiersprachenausdrücke in DNA-Strings (d. h. konkret die Codegenerierungs-Komponente des Compilers) für die Synthesevorrichtung entsprechend angepaßt wird. Das vorgeschlagene Konzept ist also auch in der Hinsicht universell, daß neue Basistechnologien einfach für neue Generationen des vorgeschlagenen Hybridrechners genutzt werden können.

### 1.2 Systemkomponenten

Zur Illustration werden diese Vorteile des vorgeschlagenen Hybridrechners an einem konkreten Beispiel ausgeführt. Dabei werden die beiden wesentlichen Komponenten des Systems exemplarisch implementiert:

1. ein Ausführungsbeispiel für die Bearbeitung eines konkreten Programmausdrucks, der eine schon recht komplizierte zweifach rekursive Funktion spezifiziert, bestehend aus

(a) der Spezifikation und Eingabe der Problemlösung als funktionales Programm mittels der syntaxgesteuerten Benutzerschnittstelle des herkömmlichen Computers,

(b) die flexible und anpassungsfähige Umsetzung des Programms als String-Sequenz von Nukleotiden durch einen entsprechenden Compiler, der auf dem herkömmlichen Computer ausgeführt wird, als Eingabe für die DNA-Synthesevorrichtung,

(c) die Synthese und Vervielfältigung der spezifizierten DNA-Moleküle in einer geeigneten Pufferlösung zur Durchführung der biotechnologischen Basisoperationen, die die nebenläufige, verteilte Aufteilung der Berechnung und die Ausführung der Berechnungen realisieren,

(d) die Zusammensetzung der parallel berechneten Teilergebnisse zu Gesamtlösungen,

(e) die Extraktion des DNA-Moleküls, das die Gesamtlösung repräsentiert, aus dem Reaktor mit der Pufferlösung, mittels einer geeigneten Ankersequenz,

(f) die Sequenzierung des extrahierten DNA-Moleküls und die Rückgabe der entsprechenden Sequenz an die elektronische Komponente, und

(g) die Dekodierung der Sequenz und ihre Umsetzung (Dekompilation) und Visualisierung mit Hilfe der Benutzerschnittstelle.

2. die Erzeugung und Behandlung massiv paralleler Ausführungsstränge im DNA-Subsystem, bestehend aus

(a) der Vorbereitung der nebenläufig ausführbaren Programmteile durch entsprechende Identifizierung und Abstraktion der Ausdrücke während der Übersetzung (Compiler) auf dem herkömmlichen Rechner. Das kann sowohl durch systemgesteuerte Analyse des spezifizierten Programmausdrucks als auch durch explizite Benutzerannotationen durchgeführt werden,

(b) der Ausführung der entsprechenden Aufteilungs-Funktionen (dis). Das führt im Bio-Subsystem zur Aufteilung des jeweiligen Gesamtmoleküls in mehrere DNA-Moleküle, dem Haupttemplate und zwei (oder mehr) DNA-Molekülen, die völlig unabhängig voneinander in der Pufferlösung bearbeitet werden können,

(c) der rekursiven Anwendung des Aufteilungsschemas nebenläufig mit den zugehörigen sequentiellen Berechnungen. Das führt theoretisch zu einer riesigen Zahl unabhängiger Prozesse, die nur durch die kausalen Abhängigkeiten der Problemstellung und die in der Pufferlösung zur Verfügung gestellten Ressourcen praktisch begrenzt ist. Diese Ressourcen können in der Programmvervielfältigungsphase (PCR-Schritt nach der Synthese der Programmsequenz) abhängig von der Anwendung und der Verfügbarkeit der übrigen Materialien spezifisch eingestellt werden, und

(d) der Synchronisation (λ*) der unabhängigen Programmteile mit dem zugehörigen Haupttemplate durch die vorbereitete β-Reduktion und der dadurch realisierte Zusammenbau der Gesamtlösung.

## 1.3 Beispiel

Es werden die zwei genannten Ausführungsbeispiele anhand des folgenden Programmbeispiels diskutiert, das als Standardbenchmark für funktionale Systeme und zugehörige Rechnerarchitekturen gut untersucht ist.

Folgende mathematische Zahlenreihe (Fibonacci-Zahlen), die für die Modellierung diverser Wachstumsprozesse von Bedeutung ist, soll durch eine zweifach rekursive Funktion berechnet werden:

1,1,2,3,5,8,13,21,34,55,89,...

Die Zahlenfolge ergibt sich dadurch, daß ein Element der Folge sich aus der Summe der beiden vorangegangenen Zahlen berechnet. Die zugehörige zweifach rekursive Funktion zur Berechnung der Folge in unserer funktionalen Notation ist wie folgt:

$$f(n) = if\ (n{\leq}1)\ then\ 1\ else\ f(n\text{-}1){+}f(n\text{-}2)$$

Dabei ist $f(n)$ die $n$-te Zahl der Folge. Beginnend mit 1 für $n=0$ oder $n=1$ (*then*-Teil) ergeben sich die anderen Elemente als Summe der beiden vorhergehenden (*else*-Teil), also z. B. die zehnte Fibonacci-Zahl durch $f(10) = 89$.

Die Anzahl der notwendigen Operationen zur zweifach rekursiven Berechnung dieser Folge wächst exponentiell mit $n$, so daß zur Bestimmung von $f(20) = 10.946$ schon eine große (21.891), für $f(50) = 20.365.011.074$ eine astronomische (40.730.022.147) Zahl von Funktionsaufrufen/Rechenoperationen durchgeführt werden muß.

**1.4 Kodierungsbeispiel für die Berechnung der Fibonacci-Funktion**

Die interne Konstruktorsyntaxdarstellung obiger Fibonacci-Funktion *f* ist wie folgt:

```
AP REC VAR f SUB VAR n AP AP ⇐ VAR n INT 1
                          IF INT 1
                             AP + AP VAR f AP - VAR n INT 1
                                  AP VAR f AP - VAR n INT 2
      INT 20
```

Um die Struktur für die weiter unten angegebene Kompilation etwas besser hervorzuheben, läßt sich das Programm äquivalent wie folgt darstellen:

```
AP REC VAR f
         SUB VAR n
             AP AP ⇐
                     VAR n
                     INT 1
             IF INT 1
                AP +
                    AP VAR f
                       AP -
                           VAR n
                           INT 1
                    AP VAR f
                       AP -
                           VAR n
                           INT 2
         INT 20
```

Dabei bindet der zweistellige Konstruktor REC die folgende Variable rekursiv, SUB nicht rekursiv im Funktionsrumpf. Der Applikator AP spezifiziert die Anwendung der genannten Funktion auf die folgenden Argumente. Die einstelligen Konstruktoren VAR und INT geben den Typ des nachfolgenden Konstrukts an.

Tabelle 1 listet die DNA-Kodierung der hier verwendeten zweistelligen Konstruktoren:

| DNA-Code | Konstruktorsyntax | | |
|----------|------|-------------|--------|
| AAA.AAA  | REC  | \<variable\> | \<expr\> |
| AAA.AAG  | SUB  | \<variable\> | \<expr\> |
| AAA.AGA  | IF   | \<expr\>    | \<expr\> |
| AAA.AGG  | AP   | \<expr\>    | \<expr\> |
| AAA.GGG  | SUB* | \<variable\> | \<expr\> |

Tabelle 1: DNA-Kodierung zweistelliger Konstruktoren

Die Codes der hier verwendeten einstelligen Konstruktoren sind in Tabelle 2 angegeben:

| DNA-Code | Konstruktorsyntax |
|----------|-------------------|
| GGG.AAA  | VAR    <string>   |
| GGG.AAG  | INT    <number>   |
| GGG.AGA  | FUNC   <func-id>  |

Tabelle 2: DNA-Kodierung einstelliger Konstruktoren

Variablennamen <string> und Funktionsidentifikatoren <func-id> können durchnumeriert und wie Zahlen <number> und Zeichen <string> kodiert werden. Dabei werden einzelne Ziffern des Dualsystems durch drei Nukleotide (als Codon) kodiert, '0' als 'CCC' and '1' als 'TTT', natürlich würde auch ein Nukleotid ausreichen, allerdings wird die Redundanz durch die Verwendung von mehr Nukleotiden erhöht; je nach Fehleranfälligkeit der biotechnologischen Operationen kann die Redundanz durch Verwendung längerer Kodierungen (erweiterte Codone oder Verwendung von mehr Codonen pro Ziffer) oder durch größeren Hammigabstand der Kodierung noch verbessert oder an spezielle Gegebenheiten der eingesetzten biotechnologischen Operationen angepaßt werden.

Um eine kompakte Kodierung beliebig vieler Zeichen und Zahlen zu erlauben, werden sie durch eine Binärdarstellung mit einem Anfangs- (CAC) und einem Endmarker (ACA) kodiert. Die Technik der Anfangs- und Endmarker kann auch für die Konstruktoren verwendet werden, um einerseits eine kompaktere Kodierung zu erhalten oder andererseits den Einbau von Restriktionsschnittstellen zur Aufteilung der Ausdrücke in ihre Syntaxkomponenten zu ermöglichen.

Die folgende Tabelle 3 zeigt die hier verwendeten Codes. Der Punkt dient nur der besseren Lesbarkeit (die Aufteilung in die Codone) und ist nicht Teil der Codierung.

| DNA-Code | Zeichen | Ziffer | Func-Id | Binär-Code |
|----------|---------|--------|---------|------------|
| CCC | 'A' | 0 | + | 0 |
| TTT | 'B' | 1 | - | 1 |
| TTT.CCC | 'C' | 2 | = | 10 |
| TTT.TTT | 'D' | 3 | * | 11 |
| TTT.CCC.CCC | 'E' | 4 | / | 100 |
| TTT.CCC.TTT | 'F' | 5 | < | 101 |
| ... | ... | ... | ... | ... |
| TTT.CCC.CCC.TTT.TTT | 'N' | 19 | dis | 10011 |
| TTT.CCC.TTT.CCC.CCC | 'O' | 20 |  | 10100 |

Tabelle 3: DNA-Kodierung von Basis-Konstrukten

Zur Identifizierung und Extraktion der Gesamtlösung aus dem Puffer für das nachfolgende Auslesen (Sequenzierung) des Ergebnisses wird die folgende Sequenz als Kodierung des MAIN-Konstruktors verwendet:

| DNA-Code | Konstruktorsyntax |
|----------|-------------------|
| ACGTACGT | MAIN   <expr>     |

Man erhält also aus der Übersetzung des Ausdrucks in Konstruktorsyntax folgende Nukleotid-Sequenz:

```
ACGTACGT
AAA.AGG
AAA.AAA GGG.AAA CAC.TTT.CCC.TTT.ACA
        AAA.AAG
          GGG.AAA CAC.TTT.CCC.CCC.TTT.TTT.ACA
        AAA.AGG
          AAA.AGG GGG.AGA CAC.TTT.CCC.ACA
                  GGG.AAA CAC.TTT.CCC.CCC.TTT.TTT.ACA
                  GGG.AAG CAC.TTT.ACA
          AAA.AGA GGG.AAG CAC.TTT.ACA
                  AAA.AGG
                    GGG.AGA CAC.CCC.ACA
                    AAA.AGG
                      GGG.AAA CAC.TTT.CCC.TTT.ACA
                      AAA.AGG
                        GGG.AGA CAC.TTT.ACA
                        GGG.AAA CAC.TTT.CCC.CCC.TTT.TTT.ACA
                        GGG.AAG CAC.TTT.ACA
                  AAA.AGG
                    GGG.AAA CAC.TTT.CCC.TTT.ACA
                    AAA.AGG
                      GGG.AGA CAC.TTT.ACA
                      GGG.AAA CAC.TTT.CCC.CCC.TTT.TTT.ACA
                      GGG.AAG CAC.TTT.CCC.ACA
GGG.AAG CAC.TTT.CCC.TTT.CCC.CCC.ACA
```

d. h., die Synthesevorrichtung wird instruiert, folgendes DNA-Molekül (bestehend aus 398 Nukleotiden) zu produzieren:

```
ACGTACGTAAAAGGAAAAAAGGGAAACACTTTCCCTTTACAAAAAAGGGGAAACACTTTCCCCCC
TTTTTTACAAAAAGGAAAAGGGGGAGACACTTTCCCACAGGGAAACACTTTCCCCCCTTTTTTAC
AGGGAAGCACTTTACAAAAAGAGGGAAGCACTTTACAAAAAGGGGGAGACACCCCACAAAAAGGG
GGAAACACTTTCCCTTTACAAAAAGGGGGAGACACTTTACAGGGAAACACTTTCCCCCCTTTTTT
ACAGGGAAGCACTTTACAAAAAGGGGGAAACACTTTCCCTTTACAAAAAGGGGGAGACACTTTAC
AGGGAAACACTTTCCCCCCTTTTTTACAGGGAAGCACTTTCCCACAGGGAAGCACTTTCCCTTTC
CCCCCACA
```

Nach Durchführung aller Operationen ist das Ergebnis der Bio-Transformation des Hauptprogramms MAIN, d. h. der Berechnung von *f*(20), das folgende DNA-Molekül:

```
ACGTACGTGGGAAGCACTTTCCCTTTCCCTTTCCCTTTTTTCCCCCCCCCCCCCTTTCCCACA
```

Das Ergebnis kann mittels des MAIN Labels (ACGTACGT) aus der Pufferlösung extrahiert werden, so daß man als Ergebnis der Berechnung eine Zahl (GGG.AAG) in Binärkodierung (10101011000010) erhält.

Die Übersetzung der Binärkodierung ergibt als Ergebnis der Gesamtberechnung die Zahl 10946.

## 1.5 Kodierungsbeispiel für die verteilte Berechnung der Fibonacci-Funktion

Zunächst wird das Funktionsbeispiel:

$$f(n) = \textit{if } (n \le 1) \textit{ then } 1 \textit{ else } f(n\text{-}1) + f(n\text{-}2)$$

transformiert in

$$f(n) = \textit{ap dis } \lambda^* t_1 \ \lambda^* t_2 \textit{ if } (n \le 1) \textit{ then } 1 \textit{ else } t_1 + t_2 \ [f(n\text{-}1), f(n\text{-}2)]$$

Dabei hat der Compiler zwei unabhängig voneinander ausführbare Ausdrücke $f(n\text{-}1)$ und $f(n\text{-}2)$ identifiziert und mittels einer speziellen $\lambda$-Abstraktion ($\lambda^*$ oder SUB*) abstrahiert und für die Verteilung markiert.

Die Übersetzung ist nun analog zum Beispiel oben, wobei lediglich weitere Kodierungen für die Funktion dis und den Konstruktor $\lambda^*$ notwendig werden, die in Tabelle 1 schon eingeführt wurden.

Die Ausführung der Funktion dis führt zur Aufspaltung des Programmausdrucks in 3 Moleküle: den $\lambda^*$-Ausdruck (das o. g. Haupttemplate), und die beiden Fibonacci-Funktionsberechnungen. Für das Beispiel ergibt sich:

$$ap \ \underbrace{\boxed{sub \ n \ ap \ dis \ \lambda^* \ t_1 \ \lambda^* \ t_2 \ \ if \ (n \le 1) \ then \ 1 \ else \ t_1 + t_2 \ \ [f(n-1), f(n-2)]}}_{f} \ 20$$

und nach einem Schritt:

$$ap \ dis \ \lambda^* t_1 \ \lambda^* t_2 \textit{ if } (20 \le 1) \textit{ then } 1 \textit{ else } t_1 + t_2 \ [f(20\text{-}1), f(20\text{-}2)]$$

Dadurch entstehen im nächsten Schritt drei unabhängige Ausdrücke:

1. $\lambda^* t_1 \ \lambda^* t_2 \textit{ if } (20 \le 1) \textit{ then } 1 \textit{ else } t_1 + t_2$
2. $f(19)$
3. $f(18)$

Im weiteren Verlauf der Berechnung entstehen viele weitere unabhängig berechenbare DNA-Moleküle. Im folgenden Schritt in diesem Beispiel sieben Moleküle, von denen vier (Nr. 3,4,6,7) direkt weiter prozessiert werden können.

1. $\lambda^* t_1 \ \lambda^* t_2 \textit{ if } (20 \le 1) \textit{ then } 1 \textit{ else } t_1 + t_2$
2. $\lambda^* t_1 \ \lambda^* t_2 \textit{ if } (19 \le 1) \textit{ then } 1 \textit{ else } t_1 + t_2$
3. $f(18)$
4. $f(17)$
5. $\lambda^* t_1 \ \lambda^* t_2 \textit{ if } (18 \le 1) \textit{ then } 1 \textit{ else } t_1 + t_2$
6. $f(17)$
7. $f(16)$

und dann fünfzehn Moleküle/Ausdrücken, von denen acht (Nr. 4,5,7,8,11,12,14,15) ausführbar sind:

1. $\lambda^* t_1 \ \lambda^* t_2 \textit{ if } (20 \le 1) \textit{ then } 1 \textit{ else } t_1 + t_2$
2. $\lambda^* t_1 \ \lambda^* t_2 \textit{ if } (19 \le 1) \textit{ then } 1 \textit{ else } t_1 + t_2$
3. $\lambda^* t_1 \ \lambda^* t_2 \textit{ if } (18 \le 1) \textit{ then } 1 \textit{ else } t_1 + t_2$
4. $f(17)$
5. $f(16)$
6. $\lambda^* t_1 \ \lambda^* t_2 \textit{ if } (17 \le 1) \textit{ then } 1 \textit{ else } t_1 + t_2$
7. $f(16)$
8. $f(15)$
9. $\lambda^* t_1 \ \lambda^* t_2 \textit{ if } (18 \le 1) \textit{ then } 1 \textit{ else } t_1 + t_2$
10. $\lambda^* t_1 \ \lambda^* t_2 \textit{ if } (17 \le 1) \textit{ then } 1 \textit{ else } t_1 + t_2$
11. $f(16)$
12. $f(15)$

13. $\lambda^*t_1\, \lambda^*t_2$ *if* (16≤1) *then* 1 *else* $t_1+t_2$
14. *f*(15)
15. *f*(14)

und so weiter. Im allgemeinen können von den jeweils vorhandenen 2*K* - 1 Molekülen *K* (also immer mehr als die Hälfte) direkt weiterverarbeitet werden. In diesem Beispiel können bis zu 21891 (genau (2\**f*(20)-1) Funktionsaufrufe) unabhängig ausführbare Programmausdrücke entstehen. Letztlich sind jedoch alle Unterausdrücke berechnet und das Gesamtergebnis wird (wie analog auch schon vorher die entsprechenden Teilergebnisse) zusammengesetzt. Im vorletzten Schritt der Berechnung erhält man also drei Ausdrücke, von denen nur noch einer ausführbar ist (Nr. 1) und der die beiden anderen zum Gesamtergebnis zusammenfaßt:

1. $\lambda^*t_1\, \lambda^*t_2$ *if* (20≤1) *then* 1 *else* $t_1+t_2$
2. 6765
3. 4181

Man erhält so den Ausdruck:

$$if\ (20≤1)\ then\ 1\ else\ 6765+4181$$

schließlich:

$$6765+4181$$

und damit das Endergebnis:

$$10946$$

Damit ergibt sich bei diesem Beispiel zur nebenläufigen Berechnung unabhängiger Programmausdrücke das gleiche Ergebnis wie in Abschnitt 1.4 bei der strikt sequentiellen Ausführung.

**1.6 Bemerkung zur sequentiellen und nebenläufigen Berechnung des Ausführungsbeispiels**

Bei genügend Ressourcen bei der nebenläufigen Ausführung kann das gleiche Ergebnis mit erheblich weniger Schritten berechnet werden als bei der sequentiellen Ausführung: Während für die vollständig verteilte Berechnung nur 20 Großschritte erforderlich sind, benötigt die sequentielle Ausführung 21891 Schritte/Funktionsaufrufe (also etwa 1000 mal soviele).

Da der Berechnungsaufwand - wie oben erwähnt - exponentiell ansteigt, wächst auch die Leistungssteigerung durch die nebenläufige Ausführung mit Vergrößerung des Arguments drastisch an, für $n$ = 30 beträgt der Faktor beispielsweise schon 30 zu 2.7 Millionen (2.692.537).

Wie in [35] erläutert, wird es bei endlicher Zahl von Prozessoren (allgemein von für Rechnungen zur Verfügung stehender Ressourcen), hier DNA und Puffermaterial, notwendig, die im Übermaß vorliegende probleminhärente Nebenläufigkeit durch geeignete Einschränkung an die verfügbaren Ressourcen anzupassen, um so eine effiziente Nutzung und eine schnelle Ausführung der notwendigen Berechnungen zu gewährleisten.

LITERATUR

[1]   Adleman, L.M: *Molecular Computation of Solutions to Combinatorial Problems,* Science, Vol. 266, 1021-1024, 1994

[2]   Barendregt, H.P.: The *Lambda Calculus, Its Syntax and Semantics,* North Holland, 1981, *Studies in Logic and the Foundations of Mathematics,* Vol. 103

[3]   Baum, E.: *Building and associative memory vastly larger than the brain*, Science, 1995, Vol. 268, 583-585

[4]   Beaver, D.: *A Universal Molecular Computer,* Penn State University, Tech Report CSE-95-001

[5]   Beaver, D.: *Computing with DNA,* Journal on Computational Biology, Vol. 2, No. 1, 1995

[6]   Berkling, K.J.: *Reduction Languages for Reduction Machines,* 2nd Annual Symposium on Computer Architecture, January 1975, ACM/IEEE, pp. 133-140

[7]   Berkling, K.J.: *A Symmetric Complement to the Lambda Calculus,* Interner Bericht GMD ISF-76-7, D-5205 Sankt Augustin 1, September 14, 1976

[8]   Brown, T.A.: *Gentechnologie für Einsteiger,* Spektrum Akademischer Verlag, 1995

[9]   Church, A.: *A note on the Entscheidungsproblem,* Journal of Symbolic Logic, Vol. 1, 40-41, Correction, 101-102

[10]  Church A.; Rosser, J.B.: *Some properties of conversion*, Trans. Amer. Math. Soc., 39, 1936, 472-482

[11]  Church, A.: *The calculi of lambda conversion,* Princeton University Press, 1941

[12]  Curry, H.B.; Feys, R.: *Combinatory Logic Vol. I,* North-Holland, 1958, *Studies in Logic and the Foundations of Mathematics*

[13]  Gordon, M.: *The denotational description of programming languages,* Springer, 1979

[14]  Gordon, M.; Milner, R.; Wadsworth, C.P.: *Edinburgh LCF,* LNCS 78, 1979

[15]  Hindley, J.R.; Sedlin, J.P.: *Introduction to Combinators and $\lambda$-calculus*, Cambridge University Press, 1986, London Mathematical Society Student Texts 1

[16]  Kluge, W.E.: *The Architecture of the Reduction Machine Hardware Model,* GMD ISF-79-3, D-5205 Sankt Augustin 1, August 1979

[17]  Kluge, W.E.: *Cooperating Reduction Machines,* IEEE Transactions on Computers, Vol. C-32, No. 11, 1983, pp. 1002-1012

[18]  Kornberg, A.; Baker, T.A.: *DNA Replication,* W.H. Freeman and Co., 1992.

[19]  Kluge, W.E.: *The Organization of Reduction, Data Flow and Control Flow Systems,* MIT Press, 1992

[20]  Lipton, R.J.: *DNA Solution of Hard Computational Problems,* Science, Vol. 268, 542-545, 1995

[21]  Loeckx, J.; Sieber, K.: *The foundations of program verification,* Teubner-Wiley, 1984

[22]  Mevissen, H.; Pless, E.: *OREL/C - eine Kommandosprache als Ergänzung zur Reduktionssprache OREL/1,* GMD Arbeitspapier 239, 1998

[23]  Mevissen, H.: *ERWIN - Reduction-System Windoworiented Editor. User's Guide,* GMD Arbeitspapier 502, 1991

[24]  Mevissen, H.: *Tabellengesteuerte Transliteration von kontext-freien Sprachen. Die Sprachbeschreibungssprache OREL/SYN,* GMD Arbeitspapier 529, 1991

[25]  Milner, R.: *A proposal for standard ML,* LFP, Austin, Texas, August 1984

[26]  Patterson, J.L.;Hennessey, D.A.: *Computer Architecture: A quantiative approach,* Kaufmann, 1990

[27]  Pless, E.; Schlütter, H.: *The reduction language OREL/2*, Arbeitspapiere der GMD, 1990

[28]  Smith, E.; Zimmer, R.: *Leistungssprünge durch Massive Parallelität?*, GMD Jahresbericht 1990

[29] Stoy, J.E.: *Denotational Semantics - The Scott Strachey Approach to Programming Language Theory*, MIT Press, 1977

[30] Turing, A.M.: *On computable numbers, with an application to the Entscheidungsproblem*, London Mathematical Society, 2s. 42, 1936, 230-265

[31] Turner, D.A.: *Miranda: A non-strict functional language with polymorphic types*, FPCA, September 1985, Nancy, LNCS 201

[32] Zimmer, R.: *Cooperating Reduction Machines with Heap-Support,* 4. Workshop *Alternative Konzepte für Sprachen und Rechner,* Bad Honnef, März 1987, Bericht Nr. 2/87-1, Universität Münster

[33] Zimmer, R.: *A Heap-Supported Multiprocessor Reduction System,* GI-Workshop *Sprachen, Algorithmen und Architekturen für Parallelrechner*, Bad Honnef, Mai 1988, ISBN 0177-0454, S.253-273, Universität Münster

[34] Zimmer, R.: *Concurrent Execution of Reduction Language Expressions on a Multiprocessor-Architecture,* ACM-Workshop on *Architectural Support for Declarative Languages,* Mai 1989, S.1-18 Eilat, Israel

[35] Zimmer, R.M.: Zur *Pragmatik eines operationalisierten λ-Kalküls als Basis für interaktive Reduktionssysteme,* Oldenbourg Verlag, 1990

[36] Zimmer, R.: *Why Functional Programming does not (yet) matter*, In W. Lippe (Editor), GI-Workshop *Alternative Konzepte für Sprachen und Rechner,* Bad Honnef, April 1991, 149-168, Universität Münster Bericht 8/91-I.

[37] Zimmer, R.: *Reflections, the Church-Rosser property and "real" applications in functional systems,* In Hugh Glaser; Pieter Hartel (Editoren), Proceedings of the 3rd international Workshop on *Parallel Implementations of Functional Languages,* Southampton, UK, 5-7.06.1991, Technical Report Series Department of Electronic and Computer Science, (STR 91-07), S. 341-349.

**Patentansprüche**

1. Frei programmierbares, universelles Parallel-Rechnersystem zur Durchführung von allgemeinen Berechnungen, mit

   - einem elektronischen Vorrechner, der die Eingabe beliebiger und damit zur Spezifikation allgemeiner Berechnungen fähiger Programme erlaubt, deren Umsetzung in Ausdrücke einer Reduktionssprache realisiert und deren Kodierung in eine DNS-Sequenz vornimmt,
   - einer Synthesevorrichtung, die die kodierte DNS-Sequenz von dem Vorrechner empfängt und die die DNS-Sequenz in ein entsprechendes DNS-Molekül mit einer spezifizierten Nukleotidabfolge Synthetisiert,
   - einer Vervielfältigungsvorrichtung zum Vervielfältigen des synthetisierten DNS-Moleküls mittels einer Amplifikationsreaktion,
   - einer Reaktionsvorrichtung zum gleichzeitigen Ausführen von Transformationen der DNS-Moleküle mittels molekularbiologischer Techniken gemäß den Reduktionsregeln einer Reduktionssprache, wobei das Ergebnismolekül in der Lösung identifiziert, extrahiert und ggf. vervielfältigt wird, und
   - einer Sequenziervorrichtung zum Bestimmen der Sequenz des Ergebnismoleküls,
   - wobei diese Sequenz an den Vorrechner weitergegeben wird und
   - der Vorrechner die Sequenz dekodiert sowie die dekodierte Sequenz ausgibt.

2. Rechnersystem nach Anspruch 1, **dadurch gekennzeichnet, daß** es sich bei der Reduktionssprache um den λ-Kalkül handelt.

3. Rechnersystem nach Anspruch 1 oder 2, **dadurch gekennzeichnet, daß** die im Reduktionsapparat umgesetzten molekularbiologischen Techniken Basisoperationen wie Insert-, Delete- und Substitute-Operationen umfassen.

4. Rechnersystem nach einem der Ansprüche 1 bis 3, **dadurch gekennzeichnet, daß** die Amplifikationsreaktion einen PCR- und/oder LCR-Prozeß aufweist.

## EP 0 976 060 B1

**Claims**

1.  A free-programmable, universal and parallel computer system for performing general calculations, comprising:

    -   an electronic front-end computer that allows the input of optional programs that are thus capable of specifying general calculations, realizes their translation into expressions of a reduction language and encodes the same into a DNA sequence,

    -   a synthesizing device receiving the encoded DNA sequence from the front-end computer and synthesizing the DNA sequence into a corresponding DNA molecule with a specified nucleotide sequence,

    -   a reproduction device for reproducing the synthetic DNA molecule by means of an amplification reaction,

    -   a reaction device for simultaneously performing transformations of the DNA molecules through bio-molecular technologies according to the reduction rules of a reduction language, the result-molecule being identified in the solution, extracted and possibly reproduced, and

    -   a sequencing device for determining the sequence of the result-molecule,

    -   this sequence being transmitted to the front-end computer, and

    -   the front-end computer decoding the sequence and outputting the decoded sequence.

2.  The computer system of claim 1, **characterized in that** the reduction language is the $\lambda$ calculus.

3.  The computer system of claim 1 or 2, **characterized in that** bio-molecular techniques transformed in the reduction device comprise basic operations such as insert, delete and substitute operations.

4.  The computer system of one of claims 1 to 3, **characterized in that** the amplification reaction comprises a PCR and/or a LCR process.


**Revendications**

1.  Système informatique ou, en d'autres termes, système d'ordinateur parallèle universel et à programmation libre pour effectuer des calculs généraux, qui inclut:

    un préprocesseur électronique qui permet d'entrer des programmes quelconques et donc adaptés à la spécification de calculs généraux, réalise leur conversion en expressions d'un langage de réduction et exécute leur codage en une séquence d'ADN,
    un dispositif de synthèse qui reçoit du préprocesseur la séquence d'ADN codée et qui synthétise la séquence d'ADN en une molécule d'ADN correspondante à séquence définie spécifiée de nucléotides,
    un dispositif de multiplication pour multiplier la molécule d'ADN synthétisée au moyen d'une réaction d'amplification,
    un dispositif de réaction pour exécuter simultanément des transformations des molécules d'ADN au moyen de techniques de biologie moléculaire selon des règles de réduction d'un langage de réduction, la molécule résultante dans la solution étant identifiée, extraite et éventuellement multipliée et,
    un dispositif de séquencement pour définir la séquence de la molécule résultante,
    dans lequel cette séquence est transmise au préprocesseur et
    le processeur décode la séquence et sort la séquence décodée.

2.  Système informatique selon la revendication 1, **caractérisé en ce qu'**il s'agit, en ce qui concerne le langage de réduction, du calcul $\lambda$.

3.  Système informatique selon la revendication 1 ou 2, **caractérisé en ce que** les techniques de biologie moléculaire converties dans l'appareil de réduction comprennent des opérations de base comme des opérations d'insertion, d'annulation et de substitution.

4.  Système informatique selon l'une quelconque des revendications 1 à 3, **caractérisé en ce que** la réaction d'amplification comprend un processus de réaction en chaîne de polymérase et/ou de réaction en chaîne de ligase ou, en d'autres termes, de PCR et/ou de LCR selon les initiales des termes anglo-saxons respectifs Polymerase chain reaction et Ligase chain reaction.

FIG.1

FIG.2